# EUROPÄISCHE PATENTSCHRIFT

(11) **EP 0 578 986 B1**
(45) Veröffentlichungstag und Bekanntmachung des Hinweises auf die Patenterteilung: **05.02.1997**
(21) Anmeldenummer: 93109655.6
(22) Anmeldetag: 17.06.1993
(51) Int. Cl.: C01B 33/32

(54) **Verfahren zur Herstellung von Natriumsilikaten mit Schichtstruktur sowie ihre Verwendung**
Process for the preparation of layered sodium silicates and use thereof
Procédé de préparation de silicates de sodium de structure en couches et leur utilisation

(30) Priorität: 17.07.1992 DE 4223545
(43) Veröffentlichungstag der Anmeldung: 19.01.1994
(73) Patentinhaber: HOECHST AKTIENGESELLSCHAFT, 65926 Frankfurt am Main (DE)
(72) Erfinder: Adrian, Renate, D-5030 Hürth (DE); Bauer, Harald, Dr., D-6093 Flörsheim (DE); Schimmel, Günther, Dr., D-5042 Erftstadt-Gymnich (DE); Tapper, Alexander, Dr., D-4050 Mönchengladbach 2 (DE)

(56) Entgegenhaltungen:
- EP-A- 0 164 514
- EP-A- 0 320 770
- DATABASE WPI Week 9229, Derwent Publications Ltd., London, GB; AN 92-238192 & JP-A-4 160 013 (LION CORP)

## Beschreibung

Die vorliegende Erfindung betrifft ein Verfahren zur Herstellung von kristallinen Natriumsilikaten mit Schichtstruktur und einem molaren SiO₂ : Na₂O-Verhältnis von 1,9 : 1 bis 20 : 1, vorzugsweise von 3,5 : 1 bis 4,5 : 1 sowie die Verwendung dieser Natriumsilikate.

Moderne Waschmittel stellen Mehrstoffgemische dar, die u.a. Builder, Cobuilder, ein Bleichsystem und einen Stabilisator enthalten. Dabei werden als Builder beispielsweise Natriumtripolyphosphat oder Zeolith A, als Cobuilder Polycarboxylate, als Bleichsysteme Percarbonat oder eine Mischung von Perboraten und Tetraacetylethylendiamin (TAED) und als Stabilisatoren Phosphonate verwendet.

Aus der EP-PS 164 514 ist ein Wasch- und Reinigungsmittel bekannt, welches neben Tensiden kristalline schichtförmige Natriumsilikate der Zusammensetzung NaMSiₓO₂ₓ₊₁ . yH₂O (mit M gleich Natrium oder Wasserstoff, x von 1,9 bis 4 und y von 0 bis 20) als Buildern enthält. Dabei zeigen kristalline Natriumsilikate ein höheres Kalkbindevermögen als amorphe, was auf ihren schichtförmigen Aufbau mit erhöhtem Polymerisationsgrad zurückzuführen ist.

Bekannte kristalline Natriumsilikate kommen in der Natur vor, sie werden aber auch künstlich hergestellt, beispielsweise
- Natrosilit: Na₂Si₂O₅
- Kanemit: NaHSi₂O₅
NaHSi₂O₅ . H₂O
NaHSi₂O₅ . 3 H₂O
- Makatit: Na₂Si₄O₉. 3 H₂O
- Magadiit: Na₂Si₁₄O₂₉ . 11 H₂O
- Kenyait: Na₂Si₂₂O₄₅ . 10 H₂O

Von besonderem Interesse sind die sich von der Struktur des Kanemits ableitenden Natriumsilikate, da diese in der Waschflotte einen geringeren pH-Wert als das in der EP-PS 164 514 genannte, im wesentlichen aus δ-Na₂Si₂O₅ bestehende Natriumsilikat aufweisen. Zur Herstellung von Kanemit kann entweder β-Na₂Si₂O₅ oder α-Na₂Si₂O₅ mit einem Wasser-Methanol-Gemisch bei 100°C behandelt werden, wobei anschließend 5 bis 24 Stunden auf 700°C erhitzt und schließlich mit Wasser behandelt wird.

Nachteilig ist dabei, daß diese Herstellung wegen der erforderlichen kontrollierten Zugabe der einzelnen Substanzen aufwendig ist und wegen der Brennbarkeit des Methanols erhebliche Sicherheitsvorkehrungen erfordert.

Nach der EP-PS 164 514 wird ein kanemitähnliches Produkt dadurch erhalten, daß δ-Na₂Si₂O₅ durch Aufschlämmen mit Wasser hydrolysiert wird, die Aufschlämmung anschließend filtriert und der resultierende Feststoff schließlich bei 105°C getrocknet wird.

Dabei ist von Nachteil, daß die Aufschlämmung außerordentlich schlecht filtrierbar ist und ein NaOH-Äquivalent mit dem Filtrat verloren geht.

Es ist daher Aufgabe der vorliegenden Erfindung, ein Verfahren zur Herstellung von kristallinen Natriumsilikaten mit Schichtstruktur anzugeben, bei welchem unter Verzicht auf brennbare Reaktionsteilnehmer keine Filtrationsprobleme auftreten. Das wird erfindungsgemäß dadurch erreicht, daß man im wesentlichen aus δ-Na₂Si₂O₅ bestehendes Natriumsilikat mit mindestens einer Säure im pH-Bereich von 9 bis 13 unter Rühren umsetzt.

Das Verfahren gemäß der Erfindung kann weiterhin wahlweise auch noch dadurch ausgestaltet sein, daß
a) als Säuren Kohlendioxid, Natriumhydrogencarbonat, Borsäure, Natriumtetraborat, Schwefelsäure, Phosphorsäure, Salzsäure, Alkansulfonsäuren, Alkancarbonsäuren und/oder Hydroxycarbonsäuren verwendet sind;
b) die Umsetzung des Natriumsilikates mit der Säure im Rieselzustand erfolgt;
c) mindestens eine Säure versprüht, zerstäubt oder gasförmig eingesetzt wird;
d) man das ausgefallene Reaktionsprodukt abfiltriert und daß man den Filterkuchen nach Waschen mit alkalisch eingestelltem Wasser im Vakuum trocknet;
e) der pH-Wert bei der Umsetzung des Natriumsilikates mit der Säure und der pH-Wert des alkalisch eingestellten Wassers etwa gleich sind;
f) man das Reaktionsgemisch eindampft und trocknet;
g) man das Reaktionsgemisch in einem warmen Gasstrom versprüht.

Schließlich können das nach dem erfindungsgemäßen Verfahren hergestellte kristalline Natriumsilikat ebenso wie ein Gemisch aus diesem Natriumsilikat und Natriumsalzen als Mittel zum Waschen, Reinigen oder Geschirrspülen verwendet werden.

Die enthärtende Wirkung des erfindungsgemäßen kristallinen Natriumsilikates in Wasch-, Reinigungs- und Geschirrspülmitteln beruht auf seiner schichtförmigen Molekülstruktur und auf dem Eigen-pH-Wert des Hydrogensilikates, wodurch die Einlagerung bzw. Fällung der im Wasser enthaltenen Erdalkali-Ionen (Enthärten des Wassers) bewirkt wird.

Beim Verfahren gemäß der Erfindung wird das Ausgangsprodukt δ-Na₂Si₂O₅ hydrolysiert, ohne daß sich dabei Kieselsäuren vom Typ δ-H₂Si₂O₅ bilden.

Beläßt man beim erfindungsgemäßen Verfahren die bei der Hydrolyse gebildeten Alkalisalze beim kristallinen Natriumsilikat, so können sie bei der Verwendung als Waschmittelkomponente eine reinigungsunterstützende Wirkung hervorrufen. So kann beispielsweise Natriumcarbonat zur Wasserenthärtung beitragen, während Alkalisalze der Citronensäure Komplexbildner für Calcium- und Magnesium-Ionen darstellen.

### Beispiel 1 (gemäß der Erfindung)

In einem von außen temperierbaren Gefäß wurden 485 g entionisiertes Wasser vorgelegt und 228 g im wesentlichen aus δ-Na₂Si₂O₅ bestehendes Natriumsilikat eingetragen. Nach Kühlung auf 10°C wurde unter Rühren CO₂ eingeleitet, wobei ein Temperaturanstieg über 20°C durch entsprechende weitere Kühlung verhindert wurde. Die CO₂-Einleitung wurde bei Erreichen eines pH-Wertes von 10,3 beendet. Das ausgefallene Reaktionsprodukt wurde abfiltriert, mit entionisiertem, mit Natronlauge auf einen pH-Wert von 10,3 eingestelltem Wasser gewaschen und im Vakuum bei 50°C getrocknet. Filterleistung: 228 l/m²h

### Beispiel 2 (gemäß der Erfindung)

In einem von außen temperierbaren Gefäß wurden in 485 g vorgelegtes Wasser 228 g im wesentlichen aus δ-Na₂Si₂O₅ bestehendes Natriumsilikat eingetragen. Dann wurden 107 g NaHCO₃ langsam in fester Form zugegeben. Nach Erreichen eines pH-Wertes von 10,5 wurde das ausgefallene Reaktionsprodukt abfiltriert, mit entionisiertem, mit Natronlauge auf einen pH-Wert von 10,5 eingestelltem Wasser gewaschen und im Vakuum bei 50°C getrocknet. Filterleistung: 152 l/m²h

### Beispiel 3 (gemäß der Erfindung)

In einem von außen temperierbaren Gefäß wurden 485 g Wasser vorgelegt und 114 g im wesentlichen aus δ-Na₂Si₂O₅ bestehendes Natriumsilikat eingetragen. Unter Kühlung auf mindestens 20°C wurde CO₂ bis zur Sättigung eingeleitet (pH = 7,6). Nach kurzem Nachrühren wurden 116 g im wesentlichen aus δ-Na₂Si₂O₅ bestehendes Natriumsilikat langsam zugegeben. Zur Verbesserung der Rührfähigkeit wurden weitere 75 g Wasser zugefügt. Nach Erreichen eines pH-Wertes von etwa 10 wurde das Reaktionsprodukt abfiltriert, mit entionisiertem, mit Natronlauge auf einen pH-Wert von etwa 10,5 eingestelltem Wasser gewaschen und im Vakuum bei 50°C getrocknet. Filterleistung: 405 l/m²h

### Beispiel 4 (gemäß der Erfindung)

Beispiel 1 wurde mit der Änderung wiederholt, daß anstelle der CO₂-Einleitung mit
- a) 142 g Schwefelsäure: (jeweils 50 Gewichts% H₂SO₄)
- b) 187 g Schwefelsäure:
umgesetzt wurde, wobei sich ein pH-wert von 11 bzw. 9 einstellte. Nach Abfiltrieren vom ausgefallenen Reaktionsprodukt wurde der Filterkuchen mit entionisiertem, mit Natronlauge auf einen pH-Wert von 11 bzw. 9 eingestellten Wasser gewaschen und im Vakuum getrocknet. Filterleistung: a) 281 l/m²h; b) 558 l/m²h
Es wurden erhalten:
- a) 196 g: NaHSi₂O₅ . 3 H₂O
- b) 193 g: NaHSi₂O₅ . 3 H₂O
(Na₂O : SiO₂ = 1 : 7,5)

### Beispiel 5 (Vergleichsbeispiel)

Beispiel 4 wurde mit der Änderung wiederholt, daß 237 g Schwefelsäure (50 Gewichts% H₂SO₄) verwendet wurden, wobei sich ein pH-Wert von 7 einstellte. Nach Abfiltrieren vom ausgefallenem Reaktionsprodukt, Waschen des Filterkuchens mit entionisiertem Wasser (pH = 7) und Trocknen im Vakuum wurden 124 g δ-H₂Si₂O₅ erhalten. Filterleistung: 317 l/m²h

### Beispiel 6 (gemäß der Erfindung)

Beispiel 1 wurde mit der Änderung wiederholt, daß anstelle der CO₂-Einleitung mit 82 g Phosphorsäure (75 Gewichts% H₃PO₄) umgesetzt wurde, wobei sich ein pH-Wert von 10,8 einstellte. Nach Abfiltrieren des ausgefallenen Reaktionsproduktes wurde mit entionisiertem, mit Natronlauge auf einen pH-Wert von 10,8 eingestellten Wasser gewaschen und im Vakuum getrocknet. Es wurden 179 g NaHSi₂O₅ . H₂O erhalten. Filterleistung: 218 l/m²h

### Beispiel 7 (gemäß der Erfindung)

Beispiel 1 wurde mit der Änderung wiederholt, daß anstelle der CO₂-Einleitung mit 129 g Salzsäure (37 Gewichts% HCl) umgesetzt wurde, wobei sich ein pH-Wert von 11,1 einstellte. Nach Abfiltrieren des ausgefallenen Reaktionsproduktes wurde mit entionisiertem, mit Natronlauge auf einen pH-Wert von 11,8 eingestelltem Wasser gewaschen und im Vakuum getrocknet. Es wurden 189 g NaHSi₂O₅ . 3 H₂O erhalten. Filterleistung: 358 l/m²h

### Beispiel 8 (gemäß der Erfindung)

Beispiel 1 wurde mit der Änderung wiederholt, daß anstelle der CO₂-Einleitung mit 61 g Ameisensäure (98 Gewichts% HCOOH) umgesetzt wurde, wobei sich ein pH-Wert von 10,7 einstellte. Nach Abfiltrieren des ausgefallenen Reaktionsproduktes wurde mit entionisiertem, mit Natronlauge auf einen pH-Wert von 10,7 eingestelltem Wasser gewaschen und im Vakuum getrocknet. Es wurden 189 g NaHSi₂O₅ . 3 H₂O erhalten. Filterleistung: 393 l/m²h

### Beispiel 9 (gemäß der Erfindung)

Beispiel 1 wurde mit der Änderung wiederholt, daß anstelle der CO₂-Einleitung mit 75 g Essigsäure (99,8 Gewichts% CH₃COOH) umgesetzt wurde, wobei sich ein pH-Wert von 11,1 einstellte. Nach Abfiltrieren des ausgefallenen Reaktionsproduktes wurde mit entionisiertem, mit Natronlauge auf einen pH-Wert von 11,1 eingestelltem Wasser gewaschen und im Vakuum getrocknet. Es wurden 196 g NaHSi₂O₅ . 3 H₂O erhalten. Filterleistung: 361 l/m²h

### Beispiel 10 (gemäß der Erfindung)

In einem von außen temperierbaren Gefäß wurden 596 g entionisiertes Wasser vorgelegt und unter Rühren 228 g im wesentlichen aus δ-Na₂Si₂O₅ bestehendes Natriumsilikat eingetragen. Unter Aufrechterhaltung einer Temperatur von 20°C wurden langsam 89 g feste Citronensäure zugegeben, wonach sich ein pH-Wert von 11,0 einstellte. Nach Abfiltrieren des ausgefallenen Reaktionsproduktes wurde der Filterkuchen mit entionisiertem, mit Natronlauge auf einen pH-Wert von etwa 11 eingestelltem Wasser gewaschen und im Vakuum getrocknet. Es wurden 198 g NaHSi₂O₅ . 3 H₂O erhalten. Filterleistung: 330 l/m²h

### Beispiel 11 (gemäß der Erfindung)

In einem von außen temperierbaren Gefäß wurden 585 g entionisiertes Wasser vorgelegt und unter Rühren 228 g im wesentlichen aus δ-Na₂Si₂O₅ bestehendes Natriumsilikat eingetragen. Unter Aufrechterhaltung einer Temperatur von 20°C wurden langsam 97 g feste Borsäure zugegeben, wonach sich ein pH-Wert von 11,8 einstellte. Nach Abfiltrieren des ausgefallenen Reaktionsproduktes wurde der Filterkuchen mit entionisiertem, mit Natronlauge auf einen pH-Wert von 11,8 eingestelltem Wasser gewaschen und im Vakuum getrocknet. Es wurden 201 g NaHSi₂O₅ . 3 H₂O erhalten. Filterleistung: 186 l/m²h

### Beispiel 12 (gemäß der Erfindung)

In einem von außen temperierbaren Gefäß wurden 485 g entionisiertes Wasser vorgelegt und unter Rühren 228 g im wesentlichen aus δ-Na₂Si₂O₅ bestehendes Natriumsilikat eingetragen. Nach Temperierung auf 20°C wurden 238 g Natriumtetraborat-Dekahydrat zugegeben, wonach sich ein pH-Wert von 12,4 einstellte. Nach Abfiltrieren des ausgefallenen Reaktionsproduktes wurde der Filterkuchen mit entionisiertem, mit Kalilauge auf einen pH-Wert von 12,5 eingestelltem Wasser gewaschen und im Vakuum getrocknet. Es wurden 192 g NaHSi₂O₅ . 3 H₂O erhalten. Filterleistung: 226 l/m²h

### Beispiel 13 (Vergleichsbeispiel)

In einem von außen temperierbaren Gefäß wurden 485 g entionisiertes Wasser vorgelegt und unter Rühren 228 g im wesentlichen aus δ-Na₂Si₂O₅ bestehendes Natriumsilikat eingetragen, wonach sich ein pH-Wert von 13,2 einstellte. Nach Abfiltrieren des Feststoffes (Filterleistung: 93 l/m²h) wurde der gebildete Filterkuchen erneut unter Rühren in 485 g Wasser aufgeschlämmt und vom Feststoff abfiltriert (Filtrat: pH 13,2; Filterleistung: 63 l/m²h). Aufschlämmen und Filtrieren wurde noch zweimal mit folgenden Ergebnissen wiederholt:
a) pH = 13,0; Filterleistung: 47 l/m²h
b) pH = 12,3; Filterleistung: 46 l/m²h

## Patentansprüche

1. Verfahren zur Herstellung von kristallinen Natriumsilikaten mit Schichtstruktur und einem molaren SiO₂ : Na₂O-Verhältnis von 1,9 : 1 bis 20 : 1, vorzugsweise von 3,5 : 1 bis 4,5 : 1, dadurch gekennzeichnet, daß man im wesentlichen aus δ-Na₂Si₂O₅ bestehendes Natriumsilikat mit mindestens einer Säure im pH-Bereich von 9 bis 13 unter Rühren umsetzt.

2. Verfahren nach Anspruch 1, dadurch gekennzeichnet, daß als Säuren Kohlendioxid, Natriumhydrogencarbonat, Borsäure, Natriumtetraborat, Schwefelsäure, Phosphorsäure, Salzsäure, Alkansulfonsäuren, Alkancarbonsäuren und/oder Hydroxycarbonsäuren verwendet sind.

3. Verfahren nach Anspruch 1, dadurch gekennzeichnet, daß die Umsetzung des Natriumsilikates mit der Säure im Rieselzustand erfolgt.

4. Verfahren nach mindestens einem der Ansprüche 1 bis 3, dadurch gekennzeichnet, daß mindestens eine Säure versprüht, zerstäubt oder gasförmig eingesetzt wird.

5. Verfahren nach mindestens einem der Ansprüche 1 bis 4, dadurch gekennzeichnet, daß man das ausgefallene Reaktionsprodukt abfiltriert und daß man den Filterkuchen nach Waschen mit alkalisch eingestelltem Wasser im Vakuum trocknet.

6. Verfahren nach Anspruch 5, dadurch gekennzeichnet, daß der pH-Wert bei der Umsetzung des Natriumsilikates mit der Säure und der pH-Wert des alkalisch eingestellten Wassers etwa gleich sind.

7. Verfahren nach mindestens einem der Ansprüche 1 bis 4, dadurch gekennzeichnet, daß man das Reaktionsgemisch eindampft und trocknet.

8. Verfahren nach Anspruch 7, dadurch gekennzeichnet, daß man das Reaktionsgemisch in einem warmen Gasstrom versprüht.

9. Verwendung des nach dem Verfahren gemäß mindestens einem der Ansprüche 1 bis 6 hergestellten kristallinen Natriumsilikates als Mittel zum Waschen, Reinigen oder Geschirrspülen.

10. Verwendung des nach dem Verfahren gemäß mindestens einem der Ansprüche 1 bis 4 sowie 7 und 8 hergestellten Gemisches aus kristallinem Natriumsilikat und Natriumsalzen als Mittel zum Waschen, Reinigen oder Geschirrspülen.

## Claims

1. A process for the preparation of crystalline sodium silicate of sheet structure and a molar SiO₂ / Na₂O ratio of 1.9 : 1 to 20 :1, preferably of 3.5 : 1 to 4.5 : 1, which comprises reacting sodium silicate substantially comprising δ-Na₂Si₂O₅ in a pH range of from 9 to 13 with at least one acid with stirring.

2. The process as claimed in claim 1, wherein the acids used are carbon dioxide, sodium bicarbonate, boric acid, sodium tetraborate, sulfuric acid, phosphoric acid, hydrochloric acid, alkanesulfonic acids, alkanecarboxylic acids and/or hydroxycarboxylic acids.

3. The process as claimed in claim 1, wherein the reaction of the sodium silicate with the acid is carried out in a free-flowing state.

4. The process as claimed in at least one of claims 1 to 3, wherein at least one acid is used in sprayed, atomized or gaseous form.

5. The process as claimed in at least one of claims 1 to 4, wherein the precipitated reaction product is filtered off and the filter cake, after washing with water made alkaline, is dried in vacuo.

6. The process as claimed in claim 5, wherein the pH on reaction of the sodium silicate with the acid is approximately equal to the pH of the water made alkaline.

7. The process as claimed in at least one of claims 1 to 4, wherein the reaction mixture is evaporated and dried.

8. The process as claimed in claim 7, wherein the reaction mixture is sprayed in a warm gas stream.

9. The use of the crystalline sodium silicate prepared by the process of at least one of claims 1 to 6 as a detergent, cleaning or dishwashing agent.

10. The use of the mixture of crystalline sodium silicate and sodium salts prepared by the process of at least one of claims 1 to 4 and 7 and 8 as a detergent, cleaning or dishwashing agent.

## Revendications

1. Procédé de préparation de silicates de sodium cristallins à structure lamellaire présentant un rapport molaire SiO₂/Na₂O de 1,9 : 1 à 20 : 1, de préférence de 3,5 : 1 à 4,5 : 1, caractérisé en ce que l'on fait réagir un silicate de sodium consistant essentiellement en δ-Na₂Si₂O₅ avec au moins un acide dans l'intervalle de pH de 9 à 13, sous agitation.

2. Procédé selon la revendication 1, caractérisé en ce que l'on utilise en tant qu'acides le dioxyde de carbone, le bicarbonate de sodium, l'acide borique, le tétraborate de sodium, l'acide sulfurique, l'acide phosphorique, l'acide chlorhydrique, des acides alcanesulfoniques, des acides alcanoïques et/ou des acides hydroxycarboxyliques.

3. Procédé selon revendication 1, caractérisé en ce que la réaction entre le silicate de sodium et l'acide est réalisée en état de ruissellement.

4. Procédé selon au moins une des revendications 1 à 3, caractérisé en ce que l'on utilise au moins un acide en pulvérisation, par saupoudrage ou à l'état gazeux.

5. Procédé selon au moins une des revendications 1 à 4, caractérisé en ce que l'on filtre le produit de réaction qui a précipité et après lavage du gâteau de filtration par de l'eau alcalinisée, on le sèche sous vide.

6. Procédé selon la revendication 5, caractérisé en ce que le pH à la réaction entre le silicate de sodium et l'acide et le pH de l'eau alcalinisée sont à peu près égaux.

7. Procédé selon au moins une des revendications 1 à 4, caractérisé en ce que l'on évapore le mélange de réaction et on sèche.

8. Procédé selon la revendication 7, caractérisé en ce que l'on pulvérise le mélange de réaction dans un courant de gaz chaud.

9. Utilisation du silicate de sodium cristallin préparé par le procédé selon au moins une des revendications 1 à 6, en tant que produit pour le lavage du linge, le nettoyage ou le lavage de la vaisselle.

10. Utilisation du mélange de silicate de sodium cristallin et de sels de sodium préparé par le procédé selon au moins une des revendications 1 à 4 et 7 et 8, en tant que produit pour le lavage du linge, le nettoyage ou le lavage de la vaisselle.
